(19) **Europäisches Patentamt**

**European Patent Office**

**Office européen des brevets**

(11) **EP 1 034 637 B1**

(12) **EUROPÄISCHE PATENTSCHRIFT**

| | |
|---|---|
| (45) Veröffentlichungstag und Bekanntmachung des Hinweises auf die Patenterteilung:<br>**27.03.2002 Patentblatt 2002/13** | (51) Int Cl.⁷: **H04L 7/06** |
| (21) Anmeldenummer: **98961167.8** | (86) Internationale Anmeldenummer:<br>**PCT/EP98/07169** |
| (22) Anmeldetag: **10.11.1998** | (87) Internationale Veröffentlichungsnummer:<br>**WO 99/27675 (03.06.1999 Gazette 1999/22)** |

(54) **VERFAHREN UND VORRICHTUNG ZUR AUFBEREITUNG EINES EMPFANGENEN, DATEN CODIERT ÜBERMITTELNDEN SIGNALS**

METHOD AND DEVICE FOR PREPROCESSING A RECEIVED, DATA CODED TRANSMITTING SIGNAL

PROCEDE ET DISPOSITIF PERMETTANT DE PRETRAITER UN SIGNAL RECU ET TRANSMETTANT DES DONNEES CODEES

| | |
|---|---|
| (84) Benannte Vertragsstaaten:<br>**DE FR GB** | (72) Erfinder:<br>• **CHEN, Ling**<br>  **D-64289 Darmstadt (DE)**<br>• **FEY, Wolfgang**<br>  **D-65527 Niedernhausen (DE)**<br>• **ZINKE, Olaf**<br>  **D-81669 München (DE)** |
| (30) Priorität: **25.11.1997 DE 19752063**<br>**28.02.1998 DE 19808575** | |
| (43) Veröffentlichungstag der Anmeldung:<br>**13.09.2000 Patentblatt 2000/37** | (56) Entgegenhaltungen:<br>**FR-A- 2 725 091      GB-A- 2 180 712**<br>**GB-A- 2 240 241      US-A- 4 227 181**<br>**US-A- 5 412 698** |
| (73) Patentinhaber: **Continental Teves AG & Co. oHG**<br>**60488 Frankfurt (DE)** | |

EP 1 034 637 B1

**Beschreibung**

Die Erfindung betrifft ein Verfahren und eine Vorrichtung zur Aufbereitung eines empfangenen, Daten codiert übermittelnden Signals.

Wenn codiert übermittelte Daten nach dem Empfang des entsprechenden Signals aufzubereiten sind, müssen empfängerseitig verschiedene Voraussetzungen bekannt sein, auf deren Grundlage senderseitig die Codierung erfolgte, damit die Decodierung schnell und zuverlässig erfolgen kann. Beispielsweise muß empfängerseitig das Codierverfahren bekannt sein (beispielsweise binär, PWM, AM, FM). Da codierte Daten üblicherweise zeitseriell übertragen werden, muß bei bestimmten Codierverfahren, beispielsweise bei binären Signalen oder bei PWM (Pulsbreitenmodulation) die Zeitbasis bekannt sein, auf deren Grundlage die Codierung erfolgt, damit empfängerseitig richtig decodiert werden kann.

In der FR-A-2725 091 ist ein Verfahren zur Synchronisierung von codierten Daten offenbart, bei dem zuerst eine Synchronisierfolge gesendet wird, zur Ermittlung der Übertragungszeit des Signals durch den Empfänger, und anschließend eine Anfangssignalfolge gesendet wird, zum Erkennen des Anfangszeitpunktes der Übertragung durch den Empfänger. Das Verfahren bezieht sich auf eine Fernbedienung, insbesondere eine Funkfernbedienung zum Öffnen der Türen eines Kraftfahrzeugs aus einer Entfernung. Das Verfahren soll eine sichere Funktion der Fernbedienung auch bei deren relativ geringer Ausgangsleistung und beim Vorhandensein elektromagnetischer Störungen ermöglichen.

Ein Computer-Bussystemen für eine serielle Datenübertragung ist in der US-A-5 412 698 beschrieben, das einen adaptiven Datenseparator aufweist, um eine optimale Zeitkonstante aus einem gestörten Signal zu erkennen, wobei systematische Unterschiede zwischen dem Ankommen von steigenden und fallenden Signalflanken eines digitalen Signals erkannt und kompensiert werden sollen.

In der GB-A-2 240 241 ist ein System zur Datenübertragung mit einer bestimmten Datenrate oder Frequenz beschrieben, welches eine Anordnung zur Ermittlung einer Zeitkonstanten für die Synchronisierung der Datenrate eines empfangenen Datensignals und eines Ausgansgssignals aufweist.

Ferner ist aus der GB-A-2 180 712 ein System für eine optische Datenübertragung bekannt, bei dem aus dem codierten Signal mit Hilfe eines Synchronisierbits am Anfang jedes Datenblocks mit einem erhöhten DC-Spannungsniveau die Signifikanz der nachfolgenden Datenbits auf einem niedrigeren DC-Spannungsniveau ermittelt wird.

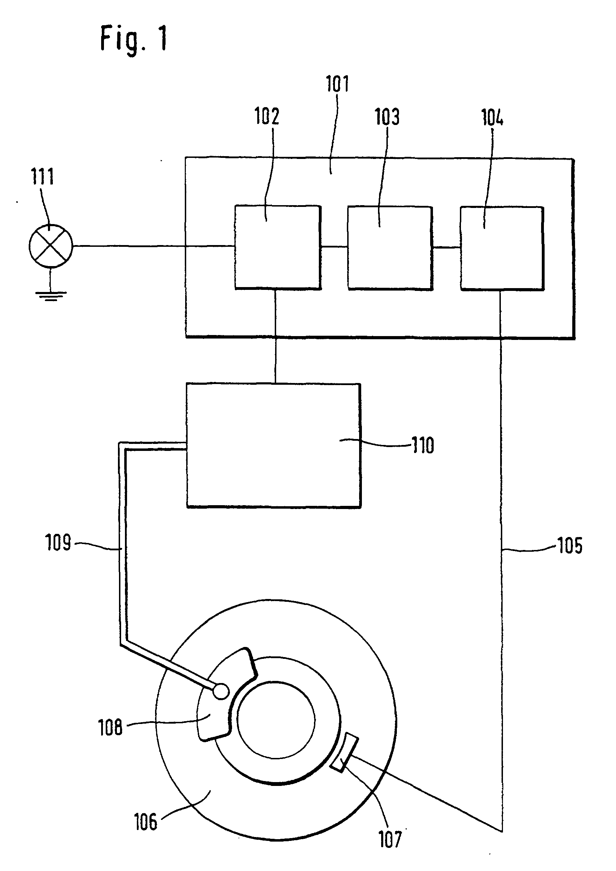

Aus der ITT-Anmeldung "Verfahren und Schaltungsanordnung zur Übertragung von Drehzahlinformationen und Zusatzdaten" vom 6. Dezember 1996 ist die senderseitige Gestaltung eines Daten übertragenden Signals bekannt. Es handelt sich hierbei um eine Anwendung im Fahrzeugbau, insbesondere um Daten von einem aktiven Radsensor zu einer übergeordneten Regelungseinrichtung zu übertragen. Ein solches System ist schematisch in Fig. 1 gezeigt. An einem Rad 106 ist einerseits ein Sensor 107 sowie andererseits eine Bremse 108 angebracht. Der Sensor 107 ist ein "aktiver" Sensor, was bedeutet, daß er nicht nur einlaufende elektrische Signale verändert (Spannung oder Strom), sondern seinerseits Signale aktiv gestaltet, um Informationen vom Rad 107 an eine übergeordnete Einrichtung 101 zu übertragen. Über eine Leitung 105 ist der Sensor 107 mit der Einrichtung 101 verbunden, wobei die Leitung 105 aus mehreren einzelnen Leitungen bestehen kann. Vom Sensor aus werden verschiedene, das Rad betreffende Informationen übertragen. Zunächst ist die Information betreffend die Raddrehzahl zu übertragen. Darüber hinaus können andere Informationen übertragen werden, beispielsweise Temperatur, Bremsbackenverschleiß oder ähnliches. Da sich der Sensor 107 in einer vergleichsweise "rauhen" Umgebung, nämlich direkt am Rad befindet (Vibrationen, Temperaturunterschiede, Feuchtigkeit), und andererseits der Verkabelungsaufwand einfach gehalten werden soll, damit er wenig fehleranfällig ist, muß das Datenübertragungsverfahren so gestaltet werden, daß es trotz der oben beschriebenen, widrigen Umstände zuverlässig funktioniert.

Das System aus Fig. 1 weist in der Steuerungs- bzw. Regelungseinrichtung 101 eine erfindungsgemäße ausgebildete Vorrichtung zur Aufbereitung eines empfangenen, Daten codiert übermittelnden Signals 104 auf, daran anschließend eine Decodiereinrichtung 103 und danach eine Steuerung 102, die nach Maßgabe der empfangenen Signale (auch weiterer, nicht gezeigter Eingangssignale) einerseits Ansteuerdaten für das betrachtete Rad liefert und andererseits andere Daten, beispielsweise Alarme für Alarmeinrichtungen 111 oder ähnliches erzeugt. Die Steuerung 102 kann elektrische Steuersignale an eine Bremsensteuerung 110 abgeben, die ihrerseits über eine Hydraulikleitung 109 die Radbremse 108 beeinflußt.

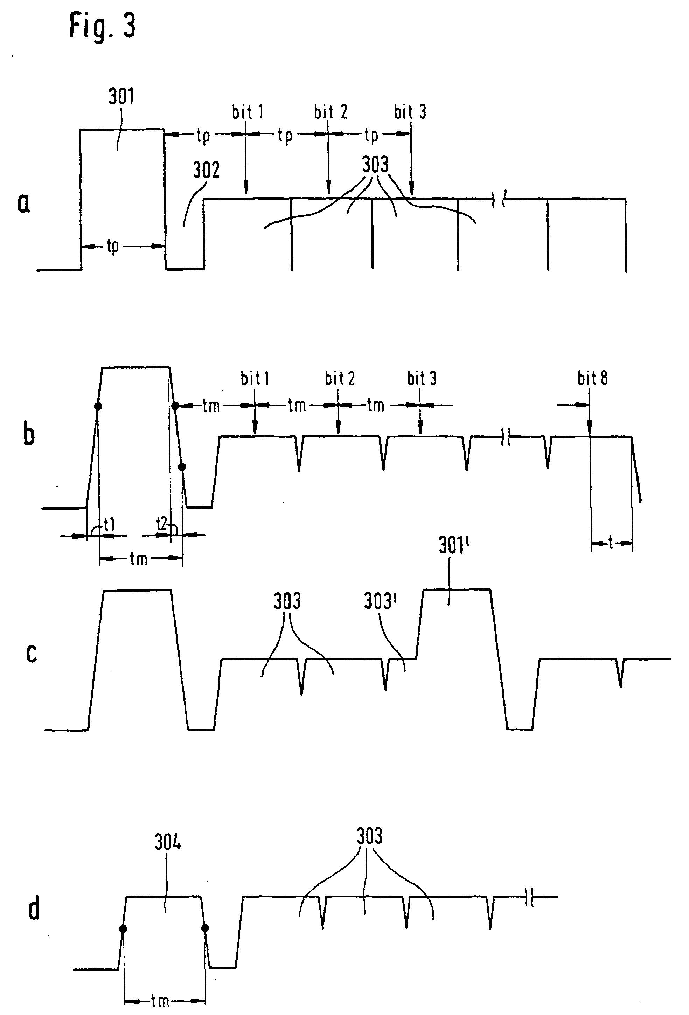

Das im aktiven Sensor 107 erzeugte, über Leitung 105 an die erfindungsgemäße Vorrichtung 104 übertragene Signal kann so gestaltet sein, wie es in der oben genannten ITT-Anmeldung beschrieben ist. Bezugnehmend auf Fig. 3 werden einzelne Datenverläufe erläutert. Fig. 3a zeigt einen idealen Verlauf, während die Figuren 3b-d reale Verläufe zeigen. Das vom Sensor 107 erzeugte Signal weist verschiedene Impulse auf, nämlich einerseits einen Radimpuls 301 und danach folgend Datenimpulse 303. Vorzugsweise hat der Radimpuls 301 eine höhere Amplitude als einer der Datenimpulse 303. Die Abfolge aus einem Radimpuls 301 und Datenimpulsen 303 wird periodisch abgegeben. Die Raddrehzahl kann dann aus dem Abstand aufeinanderfolgender Radimpulse ermittelt werden. Zwischen aufeinanderfolgenden Radimpulsen 301 wird eine geeignete Anzahl von Datenimpulsen 303 übertragen, mit der die weiteren

2

Informationen z.B. binär codiert vom Rad weg an die erfindungsgemäße Vorrichtung übertragen werden können.

Wenn das Rad stillsteht und somit die Drehzahl Null ist, wird der Radimpuls 301 durch einen Hilfsimpuls 304 ersetzt. Der Hilfsimpuls 304 hat vorzugsweise eine Amplitude, die niedriger als die des Radimpulses 301 und insbesondere gleich der der Datenimpulse 303 ist. Dadurch kann er vom Radimpuls 301 unterschieden werden. Von Datenimpulsen 303 kann der Hilfsimpuls 304 dadurch unterschieden werden, daß der Hilfsimpuls 304 unsynchronisiert "aus dem Nichts" auftaucht, während die Datenimpulse 303 unmittelbar darauf folgend gesendet werden.

Bei hohen Drehzahlen kann der in Fig. 3c gezeigte Fall auftreten. Hier wird ein neuer Radimpuls 301' zu einem Zeitpunkt erzeugt, zu dem die Übertragung der Datenimpulse 303, 303' noch nicht abgeschlossen war. Hinsichtlich des Radimpulses 301, 301' ist dies unschädlich, da dieser sicher anhand seiner hohen Amplitude erkannt werden kann. Dadurch wird die Drehzahlinformation übertragen. Im Falle der Fig. 3c kann die Verwendung bzw. Auswertung der Daten gemäß den Impulsen 303, 303' unterbunden werden. Beim Radstillstand kann der Fall der Fig. 3c nicht auftreten, da hier der Abstand zwischen den Hilfsimpulsen 304 frei wählbar ist, so daß der Abstand zwischen ihnen so gewählt wird, daß zwischen zwei Hilfsimpulsen 304 alle Datenimpulse 303 übertragen werden können.

Im Falle der Fig. 3 ist eine binäre Datenübertragung gezeigt: Die Datenimpulse 303 entsprechen jeweils einem Bit, das entweder 1 oder 0 sein kann. Lediglich zur Verdeutlichung des Sachverhalts sind sie jeweils als 1 gezeichnet. Die Bits folgen in einem bestimmten zeitlichen Abstand tp aufeinander. Zur Auswertung und Decodierung müssen sie empfängerseitig abgetastet werden, so daß ihr jeweiliger Wert bekannt ist. Somit muß empfängerseitig bekannt sein, welche Zeitbasis zum Codieren der Daten verwendet wurde. Dies wird dann ein Problem, wenn, wie oben beschrieben, der Sender in rauher Umgebung eingesetzt ist, so daß aufgrund wechselnder Umwelteinflüsse die Zeitbasis, auf deren Grundlage die Codierung erfolgt, Verschiebungen erfährt. Es kann dann nicht von einer festen Zeitbasis ausgegangen werden.

Vielmehr kann die Zeitbasis variieren, so daß sie von Fall zu Fall dem Sender mitgeteilt werden muß.

Das obige Problem wurde anhand einer Anwendung im Fahrzeugbau beschrieben. Es kann sich aber auch bei anderen Anwendungen ergeben.

Aufgabe der Erfindung ist es, ein Verfahren und eine Vorrichtung zur Aufbereitung eines empfangenen, Daten codiert übermittelnden Signals anzugeben, die eine zuverlässige Decodierung der übertragenen Daten erlauben.

Diese Aufgabe wird mit den Merkmalen der unabhängigen Ansprüche gelöst. Abhängige Ansprüche sind auf bevorzugte Ausführungsformen der Erfindung gerichtet.

Erfindungsgemäß wird mit den übertragenen Daten eine Information über die Zeitbasis bzw. Zeitkonstante übertragen, auf deren Grundlage die Codierung erfolgte. Empfängerseitig wird diese Information betreffend die Zeitbasis bzw. Zeitkonstante ermittelt und nach deren Maßgabe die weitere Auswertung der empfangenen Daten vollzogen. Vorzugsweise erfolgt die Übermittlung der die Zeitkonstante betreffenden Information zu Beginn der Datenübertragung. Dann kann die Information betreffend die Zeitkonstante auch zu Beginn der Auswertung ermittelt werden, so daß die jeweils neueste Information zur Auswertung der folgenden Daten verwendet werden kann. Bei "oft" wiederkehrenden Impulsfolgen kann aber auch eine in einem früheren Zyklus gewonnene Information betreffend eine Zeitkonstante für einen nachfolgenden Zyklus verwendet werden. Die gewonnene Zeitkonstante kann beispielsweise einer Bitdauer im empfangenen Signal entsprechen oder zumindest einen Rückschluß auf die Bitdauer erlauben, wenn binär codiert wurde, beispielsweise über einen proportionalen Zusammenhang. Bei Pulsbreitenmodulation kann die gewonnene Zeitkonstante eine mittlere Impulsdauer bezeichnen oder ähnliches.

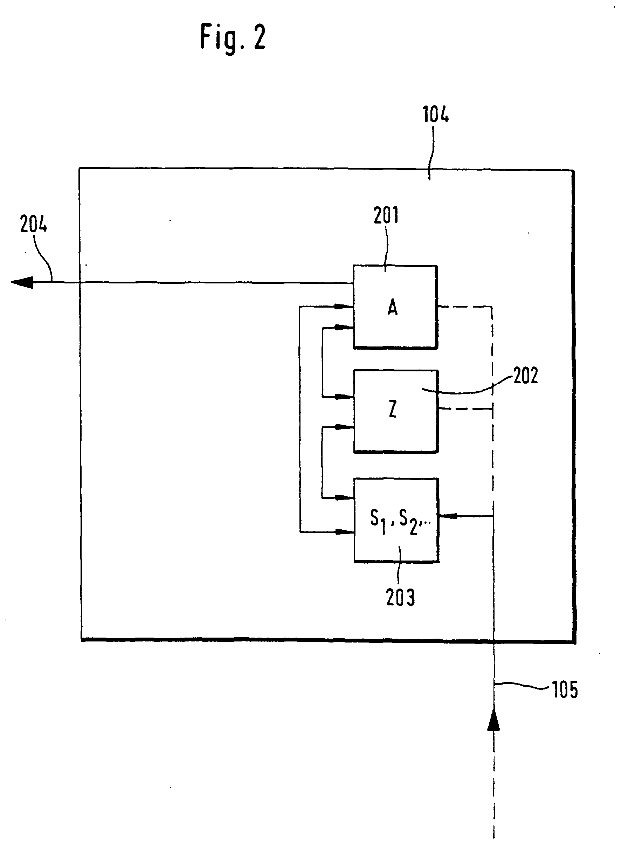

Fig. 2 zeigt eine erfindungsgemäße Ausführungsform der Vorrichtung zur Aufbereitung eines empfangenen, Daten codiert übermittelnden Signals. Sie empfängt das Signal über Leitung 105. Dieses Signal kann ggf. verschiedenen Komponenten 201, 202, 203 zugeführt werden. 202 ist eine Ermittlungseinrichtung zur Ermittlung der erwähnten Zeitkonstante. Anhand des über Leitung 105 einlaufenden Signals kann die Ermittlungseinrichtung 202 die Zeitkonstante ermitteln und teilt sie, soweit erforderlich, anderen Komponenten mit. 201 ist eine Auswerteeinrichtung, die das über Leitung 105 empfangene Signal auswertet, wobei hierunter im Sinne dieser Anmeldung auch eine Vorauswertung oder Aufbereitung zu verstehen ist. Beispielsweise kann die Auswerteeinrichtung 201 für binär codierte Signale eine Abtasteinrichtung sein, die das empfangene Signal zyklisch abtastet. Die Zykluszeit der Abtastung würde die Auswerteeinrichtung 201 dann nach Maßgabe der von der Ermittlungseinrichtung 202 ermittelten Zeitkonstante setzen. Ähnlich kann beispielsweise bei Pulsbreitenmodulation verfahren werden. 203 ist eine Erkennungseinrichtung, die die Amplitude des einlaufenden Signals betrachtet und das Signal nach Maßgabe von Schwellenwerten kategorisiert.

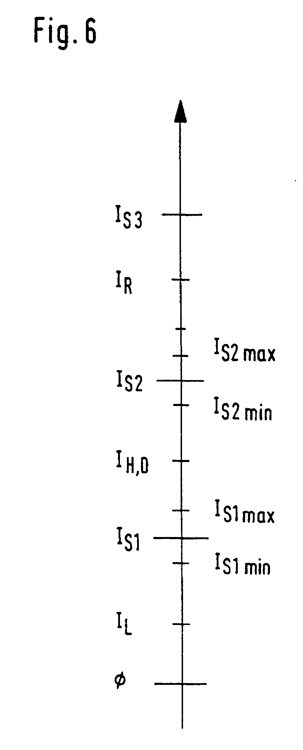

Fig. 6 ist eine schematische Darstellung von Schwellenwerten, wie sie von der Erkennungseinrichtung 203 verwendet werden können. Im gezeigten Beispiel wird dabei davon ausgegangen, daß die verschiedenen Impulse durch verschiedene Stromwerte charakterisiert sind. Ein Hilfsimpuls 304 oder Datenimpuls 303 in Fig. 3 wird erkannt, wenn dieser zwischen einem ersten Schwellenwert IS1 und einem zweiten Schwellenwert IS2 liegt. Liegt ein Stromwert über dem zweiten Schwellenwert IS2, wird auf einen Radimpuls erkannt. Liegt der Strom über einem dritten Schwellenwert IS3, der höher als der zweite Schwellenwert ist, wird auf einen Fehler geschlossen. Ein unter dem ersten Schwellenwert IS1 liegender Stromwert wird nicht als Impuls erkannt. Es handelt sich gegebenenfalls um den Grundstrom $I_L$, der der Versorgung des aktiven Sensors 107 mit Energie dient. Die Erkennungseinrichtung 203 kategorisiert demnach das einlaufende Signal und gibt eine entsprechende Information an die Ermittlungseinrichtung 202 und die Auswerteeinrichtung 201 weiter. Die Auswerteeinrichtung 201 kann dann ihrerseits ein digitales Signal erzeugen, das - gegebenenfalls gepuffert - in Amplitude und Taktfrequenz an die sonstigen Systemerfordernisse angepaßt ist. Über Leitung 204 wird es an nachfolgende Komponenten ausgegeben, die das Signal decodieren und weiterverarbeiten können.

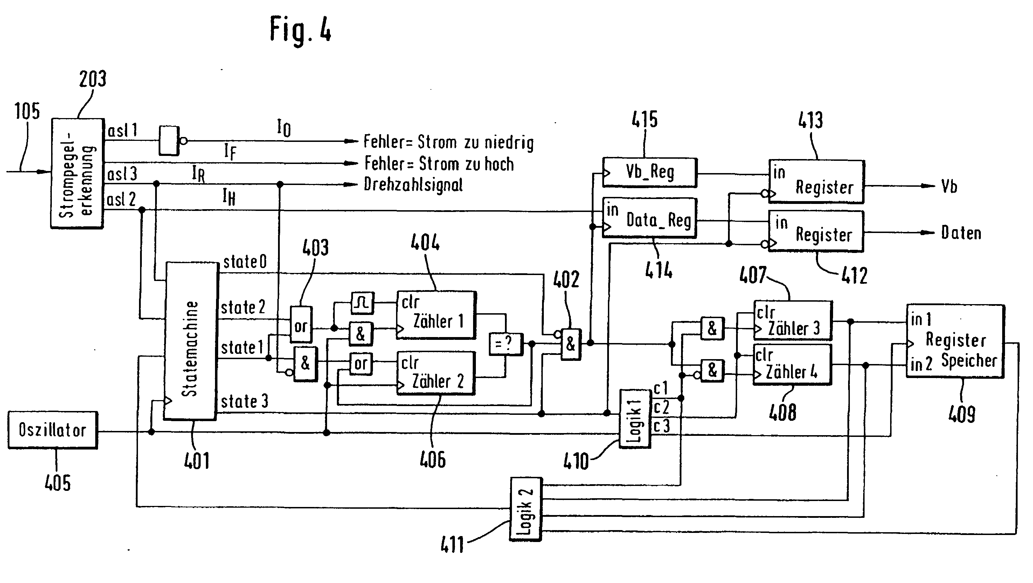

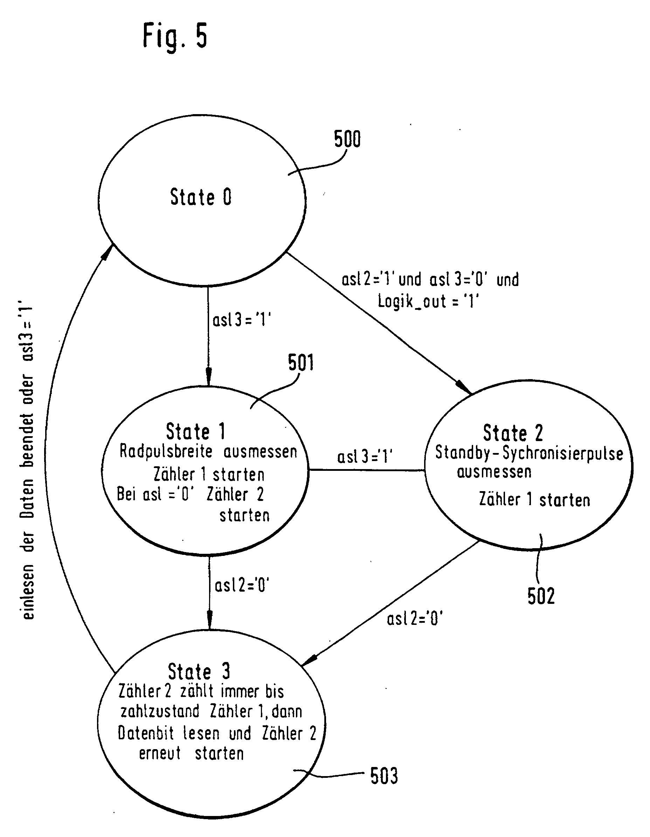

Fig. 4 zeigt eine konkretere Ausführungsform. In ihr ist unter anderem das Konzept einer "state machine" verwirklicht. Bevor die Schaltung nach Fig. 4 erläutert wird, wird die Arbeitsweise der state machine bezugnehmend auf Fig. 5 erläutert.

Vor dem Einlaufen entweder eines Radimpulses 301 oder 304 befindet sich die Schaltung im Ruhezustand 500 (State 0). Sie empfängt keine Daten und führt keine besonderen Maßnahmen aus. Sobald eine steigende Flanke erkannt wird (weil der Strom den ersten Schwellenwert IS1 überschreitet), geht sie zum Zustand 2 (State 2) 502, in dem mit der Ausmessung eines Hilfsimpulses 304 begonnen wird. Wird im weiteren Verlauf auch der zweite Schwellenwert IS2 überschritten, wird zum Zustand State 1 501 übergegangen, in dem die Pulsbreite des Radimpulses 301 ausgemessen wird. Es kann auch der Fall auftreten, daß der Pegelanstieg so schnell ist, daß das Überschreiten des ersten Schwellenwerts IS1 nicht getrennt vom Überschreiten des zweiten Schwellenwerts IS2 wahrgenommen wird. Es wird dann direkt vom Zustand State 0 500 zum Zustand State 1 501 übergegangen. Wird der erste Schwellenwert wieder unterschritten, wird zum Zustand State 3 503 übergegangen, in dem mit der Aufbereitung der empfangenen Datenimpulse 304 begonnen wird. Ist dies beendet, wird wieder zurück zum Zustand State 0 500 gegangen. Die Zustandsübergänge finden demnach im wesentlichen nach Maßgabe der Schwellenentscheidungen statt.

Vorzugsweise wird die Zeitkonstante durch Ausmessen der Impulsbreite eines Impulses, vorzugsweise des ersten Impulses, einer empfangenen Impulsfolge bestimmt. Senderseitig wäre dann der erste Impuls so zu bilden und abzusenden, daß er als Maß für die Zeitkonstante verwendet werden kann. Dies läßt sich gut mit den in Fig. 3 gezeigten Impulsfolgen vereinbaren, da dort der erste Impuls lediglich qualitativ erkannt werden muß und somit in seiner Impulsdauer zunächst unbestimmt ist, so daß die Impulsdauer zur Übermittlung der Zeitkonstante verwendet werden kann. Fig. 3a zeigt den idealen Fall idealer Rechteckformen. Die Impulsbreite tp kann dann beispielsweise durch Auszählen des Zustands währenddessen sich der Impuls auf hohem Pegel befindet, gewonnen werden. Die Figuren 3b-d zeigen reale Impulsformen mit endlich steilen Flanken. Die unterschiedlichen Impulse (Ruhe = 302; Daten- bzw. Hilfsimpuls = 303, 304; Radimpuls = 301; Fehler) können durch unterschiedliche Schwellenwerte IS1, IS2, IS3 voneinander unterschieden werden. Die Ausmessung realer Impulse kann dann so erfolgen, daß mit dem Ausmessen bei Überschreitung eines Schwellenwerts begonnen und bei Unterschreiten eines anderen Schwellenwerts beendet wird. Vorzugsweise beginnt die Ausmessung eines Hilfsimpulses dann, wenn der den Hilfsimpulspegel vom Ruhepegel unterscheidende Schwellenwert IS1 überschritten wurde. Mit der Ausmessung eines Radimpulses wird vorzugsweise dann begonnen, wenn der den Hilfsimpuls vom Radimpuls unterscheidende Schwellenwert IS2 überschritten wurde. Vorzugsweise wird das Ausmessen der Impulsbreite des ersten Impulses beendet, wenn der dem Hilfsimpuls vom Ruhezustand unterscheidende Schwellenwert IS1 unterschritten wird. Hierbei wird davon ausgegangen, daß das Signal so geformt ist, daß zwischen Beendigung des Rad- bzw. Hilfsimpulses 301, 304 und dem ersten Datenimpuls 303 nochmals ein sehr niedriger Strompegel 302 eingenommen wird.

Die Schaltung in Fig. 4 zeigt die Vorrichtung 104 und insbesondere auch die Erkennungseinrichtung 203 in genauerer Darstellung. Letztere kennzeichnet mit vier Ausgängen vier verschiedene Pegel, wobei hier auch eine Impulsgestaltung wie anhand von Fig. 3 beschrieben verwendet werden kann. 401 ist die "state machine", die die relevanten Pegelsignale von der Erkennungseinrichtung 203 empfängt und insbesondere nach Maßgabe deren Änderung einzelne Schaltungskomponenten in Betrieb setzt. Dadurch können sichere Auswertungsergebnisse gewonnen werden. Wenn im Zustand State 0 500 eine Stromsteigerung über IS1 hinaus erkannt wird, geht die Leitung State 2 auf logisch 1, der Zähler 404 wird gestartet, um die Breite des Hilfsimpulses 304 auszumessen, wobei der Zähler Taktimpulse von einem Oszillator 405 zählt. Steigt der Strom weiter über den Schwellenwert IS2 hinaus, geht die Auswertung über zum Zustand State 1 501, so daß die entsprechende Leitung auf logisch 1 gesetzt wird. Der Zähler 404 wird zurückgesetzt und erneut gestartet, um die Breite des Radimpulses 301 auszumessen. Der Zähler hört auf zu zählen, wenn der Strom unter den ersten Schwellenwert IS1 gefallen ist.

Nachdem (im Zustand State 2) ein Hilfsimpuls oder (im Zustand State 1) ein Radimpuls ausgemessen wurde, wird zum Zustand State 3 übergegangen. Hier wird die sequentielle Abtastung der Datenimpulse nach Maßgabe der empfangenen Zeitkonstante und insbesondere nach Maßgabe des Zählerstands des Zählers 404 ausgeführt. Der Zähler 406 läuft immer bis zum Zählstand des Zählers 404 (bzw. bis zu einem nach Maßgabe dieses Zählerstands gewonnenen Wert), beim Gleichstand beider Zähler wird das empfangene Signal abgetastet und der gewonnene Wert als digitaler Null- oder Eins-Wert verwendet. Dann wird Zähler 406 zurückgesetzt und erneut gestartet. Die Abtastung wird solange ausgeführt, bis anhand weiterer Entscheidungskriterien festgestellt wird, daß keine Daten mehr zu lesen sind. Vorzugsweise wird die Entscheidung über die zu lesende Datenmenge nach denselben Kriterien ausgeführt wie die Entscheidung im Sender betreffend die zu sendende Datenmenge. Dann wird wieder zum Zustand State 0 übergegangen und auf den nächsten Impuls gewartet.

In der Auswerteschaltung der Fig. 4 dienen die Zähler 407 und 408 sowie Registerspeicher 409 zur Ausführung der Entscheidungskriterien. In Logik 411 wird überprüft, ob die berechnete Anzahl von Datenbits gelesen ist.

Die Schaltung nach Fig. 4 enthält ein Datenregister 412, in dem die gelesenen Daten gepuffert werden. Zusätzlich enthält sie ein Register 413 für Gültigkeitsbits, in denen den einzelnen Datenbits zugeordnete Gültigkeitsbits gespeichert werden, um beispielsweise Bits entsprechend 303' in Fig. 3c als ungültig markieren zu können. Den Registern 412, 413 können entsprechende Schieberegister 414, 415 vorgeschaltet sein.

Die Ausführungsform nach Fig. 2 und Fig. 4 eignet sich besonders für eine Signalgestaltung nach Fig. 3a (ideales Signal), bei der zwischen Radimpuls 301 (bzw. Hilfsimpuls 304) senderseitig eine Impulspause 302 entsprechend einem Bruchteil der Impulsbreite des Rad- bzw. Hilfsimpulses eingelegt wird, wobei die Pause vorzugsweise etwa 50 % der Impulsbreite beträgt. Dann kann anschließend an den Rad- bzw. Hilfsimpuls dessen Impulsbreite tp unmittelbar als Periodendauer zur Abtastung der einzelnen, folgenden Bits verwendet werden. Im idealen Fall erfolgt dann die Abtastung eines jeden Bits immer in dessen jeweiliger zeitlichen Mitte.

Da aber zum einen die Anstiegszeiten der elektrischen Werte endlich und zum anderen sowohl die tatsächlichen Amplituden als auch die zur Entscheidung bzw. Ausmessung herangezogenen Schwellenwerte Varianzen unterliegen, kann durch diese Varianzen auch die Bestimmung der Zeitkonstante mit Ungenauigkeiten behaftet sein. Zu berücksichtigen ist ferner, daß ein (wenn auch kleiner) Fehler in der Bestimmung der Zeitkonstante bei Abtastung eines aus vielen zeitseriellen Bits bestehenden digitalen Signals sich kumuliert, weil der Fehler nicht statistisch verteilt ist, sondern immer in die gleiche Richtung wirkt. Beispielsweise führt ein Fehler von 2% nach Abtastung von 25 Bits zu einer Verschiebung des Abtastzeitpunkts um eine halbe Bitbreite.

Die oben angesprochenen Varianzen sind in Fig. 6 angedeutet. So können die Schwellenwerte IS1 und IS2 hin zu IS1max, IS1min, IS2max, IS2min variieren. Sinngemäß das gleiche gilt für die jeweiligen Strompegel $I_R$, $I_{H,D}$, $I_L$.

Somit können Überlegungen, die Amplituden- bzw. Zeitungenauigkeiten berücksichtigen, herangezogen werden, um zu ermitteln, wieviele Bits noch sicher übertragen bzw. ausgewertet werden können. Diese Überlegungen können insbesondere unter Berücksichtigung der Flankensteilheiten (Dimension A/s bei Stromimpulsen) der Impulse ermittelt werden. Beispielsweise gelten die nachfolgenden Zusammenhänge, wobei von der Übertragung von acht Bits nach einem Rad- bzw. Hilfsimpuls ausgegangen wird:

$$t1 = \frac{IS2\text{-}IL}{ktr}$$

ktr: Steilheit der steigenden Flanke des Radpulses (absoluter Wert)

$$t2 = \frac{IR\text{-}IS1}{ktf}$$

ktf: Steilheit der fallenden Flanke des Radpulses (absoluter Wert)

$$tm = tp - t1 + t2$$

tm: ausgemessene Pulsdauer, Dauer des Radpulses

$$t_{bit8} = tp + \frac{IR\text{-}IS2}{ktf} + 8^{*}tm$$

$$t = 9.5^{*}tp - t_{bit8}$$

$$= 85^{*}tp - \frac{IR\text{-}IS2}{ktf} - 8^{*}tm$$

$$= 85^{*}tp - \frac{IR\text{-}IS2}{ktf} - 8^{*}tp + 8^{*}t1 - 8^{*}t2$$

$$= 05^{*}tp - \frac{IR\text{-}IS2}{ktf} + \frac{8^{*}(IS2\text{-}IL)}{ktr} - \frac{8^{*}(IR\text{-}IS1))}{ktf}$$

$$t_{max} = 05^{*}tp - \frac{IR_{min}\text{-}IS2_{max}}{ktf_{max}} + \frac{8^{*}(IS2_{max}\text{-}IL_{min})}{ktr_{min}} - \frac{8^{*}(IR_{min}\text{-}IS1_{max}))}{ktf_{max}}$$

$$t_{\min} = 05 * tp - \frac{IR_{\max} - IS2_{\min}}{ktf_{\min}} + \frac{8*(IS2_{\min} - IL_{\max})}{ktr_{\max}} - \frac{8*(IR_{\max} - IS1_{\min}))}{ktf_{\min}}$$

$t_{\max}$ bzw. $t_{\min}$ erlauben eine Aussage über den kumulierten Fehler des Abtastzeitpunkts beim letzten (achten) Bit gegenüber dem angesichts der Codierung theoretisch gewünschten Wert. Überlegungen entsprechend den oben angedeuteten erlauben damit einen Rückschluß darauf, ob die ins Auge gefaßte Übertragungsmenge zulässig ist bzw. wie viele Daten übertragen werden können.

Die erfindungsgemäß zu behandelnde Signalgestaltung ist vorzugsweise so, daß der Radimpuls 301 eine höhere Amplitude hat als der Hilfsimpuls 304, aber eine im wesentlichen gleiche Dauer tm. Weiterhin haben bevorzugt die Datenimpulse 303 auch diese Zeitdauer tm, wobei die zeitliche Mitte des ersten Datenimpulses 303 in etwa um die Impulsbreite des Radbzw. Hilfsimpulses 301, 304 vom Ende dieser Impulse (tiefster Wert bzw. Unterschreiten eines entsprechenden Schwellenwerts) beabstandet ist.

Anhand von Fig. 3 wurde ein Codierungssystem beschrieben, in dem binäre Daten durch Amplituden, vorzugsweise Stromamplituden, codiert wurden. Die erfindungsgemäßen Vorrichtung und Verfahren sind aber auch für Übertragungssysteme geeignet, bei denen binäre Daten durch das Vorhandensein bzw. Fehlen einer Flanke im Beobachtungszeitraum codiert sein können. Auch hier wird zur Codierung eine Zeitbasis verwendet, die zu Beginn der Datenübertragung durch die Dauer des Rad- bzw. Hilfsimpulses dem Empfänger mitgeteilt und dann im Empfänger zur Aufbereitung des Signals verwendet werden kann.

**Patentansprüche**

1. Verfahren zur Aufbereitung eines empfangenen, Daten codiert übermittelnden Signals von einem aktiven Sensor (107) eines Fahrzeugrades, mit den Schritten Ermitteln einer Zeitkonstante, nach deren Maßgabe die Daten codiert wurden, aus dem empfangenen Signal, und Auswerten des empfangenen Signals nach Maßgabe der ermittelten Zeitkonstante.

2. Verfahren nach Anspruch 1,
   **dadurch gekennzeichnet,**
   **daß** die Daten durch unterscheidbare Impulse (301,303,304) codiert übertragen werden und die Zeitkonstante durch Bestimmung der Zeitdauer eines Impulses (301,304) ermittelt wird und/oder daß das empfangene Signal nach Maßgabe der ermittelten Zeitkonstante abgetastet wird und/oder daß die Ermittlung der Zeitkonstante und die Auswertung bzw. Bearbeitung des empfangenen Signals in Echtzeit erfolgen.

3. Verfahren nach Anspruch 1 oder 2,
   **dadurch gekennzeichnet,**
   **daß** das Signal eine Impulsfolge ist, deren erster Impuls ein Radimpuls (301) ist, der zur Bestimmung der Raddrehzahl verwendet wird, und deren weitere Impulse (303) Datenimpulse sind, die zur codierten Übertragung anderer Daten dienen, wobei beim Radstillstand vom aktiven Sensor (107) senderseitig der Radimpuls (301) durch einen Hilfsimpuls (304) ersetzt wird.

4. Verfahren nach Anspruch 3,
   **dadurch gekennzeichnet,**
   **daß** der Hilfsimpuls (304) eine andere Amplitude hat als der Radimpuls (301) und eine im wesentlichen gleiche Zeitdauer und/oder daß Hilfsimpuls (304) und Datenimpuls (303) eine im wesentlichen gleiche Amplitude haben und/oder daß ein Hilfsimpuls (304) einen Pegel hat, der höher als ein erster (IS1) und niedriger als ein zweiter (IS2) Schwellenwert ist, und ein Radimpuls (301) einen Pegel hat, der höher als der zweite Schwellenwert (IS2) ist, und wobei ein Fehler erkannt wird, wenn ein dritter Schwellenwert (IS3) überschritten wird, der höher als der zweite Schwellenwert (IS2) ist.

5. Verfahren nach Anspruch 4,
   **dadurch gekennzeichnet,**
   **daß** zur Bestimmung der Zeitdauer des Radimpulses (301) die Zeitmessung beim Überschreiten des zweiten Schwellenwertes (IS2) begonnen und beim Unterschreiten des ersten Schwellenwertes (IS1) beendet wird, und wobei zur Bestimmung der Zeitdauer des Hilfsimpulses (304) die Zeitmessung beim Überschreiten des ersten Schwellenwertes (IS1) begonnen und beim Unterschreiten des ersten Schwellenwertes (IS1) beendet wird.

**6.** Verfahren nach Anspruch 5,
**dadurch gekennzeichnet,**
**daß** die Zeitdauerbestimmung mit einem Zähler erfolgt, der beim Überschreiten des ersten Schwellenwertes (IS1) gestartet, beim Überschreiten des zweiten Schwellenwertes (IS2) zurückgesetzt und erneut gestartet und beim Unterschreiten des ersten Schwellenwertes (IS1) angehalten wird.

**7.** Verfahren nach einem der Ansprüche 1 bis 6,
dadurch gekenzeichnet,
daß die Menge der zu empfangenden Daten nach Maßgabe der Raddrehzahl entschieden wird.

**8.** Verfahren nach einem der Ansprüche 4 bis 7,
**dadurch gekennzeichnet,**
**daß** die Abtastung der Datenimpulse (303) ausgelöst wird, wenn ein Rad(301)- oder ein Hilfsimpuls (304) den ersten (IS1) und/oder den zweiten (IS2) Schwellenwert unterschreitet.

**9.** Verfahren nach einem der Ansprüche 1 bis 8, **dadurch gekennzeichnet, daß** das empfangene Signal unterschiedliche Strompegel hat und die ggf. vorgesehenen Schwellenwerte (IS1,IS2,IS3) Stromschwellenwerte sind.

**10.** Vorrichtung (104), die Teil einer Fahrzeugregelung (101) ist, zur Aufbereitung eines empfangenen, Daten codiert übermittelnden Signals von einem aktiven Radsensor (107), mit einer Ermittlungseinrichtung (202) zum Ermitteln einer Zeitkonstante, nach deren Maßgabe die Daten codiert wurden, aus dem empfangenen Signal, und einer Auswerteeinrichtung (201) zum Auswerten und/oder Bearbeiten des empfangenen Signals nach Maßgabe der ermittelten Zeitkonstante.

**11.** Vorrichtung nach Anspruch 10,
**dadurch gekennzeichnet,**
**daß** das empfangene Signal unterscheidbare Impulse (301, 303, 304) aufweist und die Ermittlungseinrichtung (202) die Zeitkonstante durch Bestimmung der Zeitdauer eines Impulses (301, 304) ermittelt und/oder daß die Auswerteeinrichtung (201) das empfangene Signal nach Maßgabe der von der Ermittlungseinrichtung (202) ermittelten Zeitkonstante abtastet und/oder daß die Ermittlungseinrichtung (202) und die Auswertungseinrichtung (201) in Echtzeit arbeiten.

**12.** Vorrichtung nach Anspruch 10 oder 11,
**dadurch gekennzeichnet,**
**daß** sie zum Empfangen eines Signals ausgelegt ist, das eine Impulsfolge ist, deren erster Impuls ein Radimpuls (301) ist, der zur Bestimmung der Raddrehzahl verwendet wird, und deren weitere Impulse (303) Datenimpulse sind, die zur codierten Übertragung anderer Daten dienen, wobei beim Radstillstand vom aktiven Sensor (107) senderseitig der Radimpuls (301) durch einen Hilfsimpuls (304) ersetzt wird.

**13.** Vorrichtung nach Anspruch 12,
**dadurch gekennzeichnet,**
**daß** der Hilfsimpuls (304) eine andere Amplitude hat als der Radimpuls (301) und eine im wesentlichen gleiche Zeitdauer und/oder daß Hilfsimpuls (304) und Datenimpuls (303) eine im wesentlichen gleiche Amplitude haben.

**14.** Vorrichtung nach Anspruch 13,
gekenzeichnet durch eine Erkennungseinrichtung (203), die einen Hilfsimpuls (304) an einem Pegel erkennt, der höher als ein erster Schwellenwert (IS1) und niedriger als ein zweiter Schwellenwert (IS2) ist, und die einen Radimpuls (301) an einem Pegel erkennt, der höher als der zweite Schwellenwert (IS2) ist, und die einen Fehler erkennt, wenn ein dritter Schwellenwert (IS3) überschritten wird, der höher als der zweite Schwellenwert (IS2) ist.

**15.** Vorrichtung nach Anspruch 14,
**dadurch gekennzeichnet,**
**daß** die Ermittlungseinrichtung (202) ausgelegt ist, zur Bestimmung der Zeitdauer des Radimpulses (301) die Zeitmessung beim Überschreiten des zweiten Schwellenwertes (IS2) zu beginnen und beim Unterschreiten des ersten Schwellenwertes (IS1) zu beenden und zur Bestimmung der Zeitdauer des Hilfsimpulses (304) die Zeitmessung beim Überschreiten des ersten Schwellenwertes (IS1) zu beginnen und beim Unterschreiten des ersten Schwellenwertes (IS1) zu beenden.

**16.** Vorrichtung nach Anspruch 15,
**dadurch gekennzeichnet,**
**daß** die Ermittlungseinrichtung (202) einen Zähler aufweist, der beim Überschreiten des ersten Schwellenwertes (IS1) gestartet, beim Überschreiten des zweiten Schwellenwertes (IS2) zurückgesetzt und erneut gestartet und beim Unterschreiten des ersten Schwellenwertes (IS1) angehalten wird.

**17.** Vorrichtung nach einem der vorherigen Ansprüche,
dadurch gekenzeichnet,
daß die Menge der zu empfangenden Daten nach Maßgabe der Raddrehzahl entschieden wird.

**18.** Vorrichtung nach einem der Ansprüche 14 bis 17,
**dadurch gekennzeichnet,**
**daß** die Abtastung der Datenimpulse (303) ausgelöst wird, wenn ein Rad(301)- oder ein Hilfsimpuls (304) den ersten (IS1) und/oder den zweiten (IS2) Schwellenwert unterschreitet.

**19.** Vorrichtung nach einem der Ansprüche 10 bis 18,
**dadurch gekennzeichnet,**
**daß** das empfangene Signal unterschiedliche Strompegel hat und die ggf. vorgesehenen Schwellenwerte (IS1,IS2,IS3) Stromschwellenwerte sind.

## Claims

**1.** A method for conditioning a received signal that transmits coded data from an active sensor (107) of a vehicle wheel, comprising the following steps: determining a time constant, according to which the data were coded, from the received signal, and evaluating the received signal according to the determined time constant.

**2.** A method according to Claim 1, **characterized in that** the data are transmitted in a coded state based on differentiable pulses (301, 303, 304) and the time constant is determined by determining the duration of a pulse (301, 304), and/or that the received signal is sampled according to the determined time constant, and/or that the determination of the time constant and the evaluation or processing of the received signal are carried out in real time.

**3.** A method according to Claim 1 or 2, **characterized in that** the signal is a sequence of pulses, whose first pulse is a wheel pulse (301) used for determining the wheel speed and whose other pulses (303) are data pulses used for the coded transmission of other data, wherein the wheel pulse (301) is replaced by an auxiliary pulse (304) by the active sensor (107) when the wheel is standing still.

**4.** A method according to Claim 3, **characterized in that** the auxiliary pulse (304) has a different amplitude than the wheel pulse (301) and essentially the same duration, and/or that the auxiliary pulse (304) and data pulse (303) have essentially equal amplitudes, and/or that an auxiliary pulse (304) has a level that is higher than a first (IS1) and lower than a second (IS2) threshold value, and a wheel pulse (301) has a level that is higher than the second (IS2) threshold value, with an error being detected when a third threshold value (IS3) that is higher than the second threshold value (IS2) is exceeded.

**5.** A method according to Claim 4, **characterized in that** the time measurement for determining the duration of the wheel pulse (301) is started when the second threshold value (IS2) is exceeded and terminated when the current falls below the first threshold value (IS1), and the time measurement for determining the duration of the auxiliary pulse (304) is started when the first threshold value (IS1) is exceeded and terminated when the current falls below the first threshold value (IS1).

**6.** A method according to Claim 5, **characterized in that** the duration is determined with the help of a counter that is started when the first threshold value (IS1) is exceeded, reset and started again when the second threshold value (IS2) is exceeded, and stopped when the current falls below the first threshold value (IS1).

**7.** A method according to one of the Claims 1 to 6, **characterized in that** the quantity of the data to be received is decided according to the wheel speed.

**8.** A method according to one of the Claims 4 to 7, **characterized in that** sampling of the data pulses (303) is initiated when a wheel pulse (301) or auxiliary pulse (304) falls below the first (IS1) and/or second (IS2) threshold value.

9. A method according to one of the Claims 1 to 8, **characterized in that** the received signal has different current levels and the threshold values (IS1,IS2,IS3) that may be provided are current threshold values.

10. A device (104) that is part of a vehicle control system (101) and designed for conditioning a received signal that transmits coded data from an active wheel sensor (107), wherein such device (104) comprises a determining device (202) for determining a time constant, according to which the data were coded, from the received signal, and an evaluation device (201) for evaluating and/or processing the received signal according to the determined time constant.

11. A device according to Claim 10, **characterized in that** the received signal exhibits differentiable pulses (301, 303, 304) and the determining device (202) determines the time constant by defining the duration of a pulse (301, 304), and/or that the evaluation device (201) samples the received signal according to the time constant determined by the determining device (202), and/or that the determining device (202) and the evaluation device (201) work in real time.

12. A device according to Claim 10 or 11, **characterized in that** it is designed for receiving a signal that is a sequence of pulses, whose first pulse is a wheel pulse (301) used for determining the wheel speed and whose other pulses (303) are data pulses used for the coded transmission of other data, wherein the wheel pulse (301) is replaced by an auxiliary pulse (304) by the active sensor (107) when the wheel is standing still.

13. A device according to Claim 12, **characterized in that** the auxiliary pulse (304) has a different amplitude than the wheel pulse (301) and essentially the same duration, and/or that the amplitudes of the auxiliary pulse (304) and data pulse (303) are essentially the same.

14. A device according to Claim 13, **characterized by** a detection device (203) that detects an auxiliary pulse (304) by a level that is higher than a first threshold value (IS1) and lower than a second threshold value (IS2), and that detects a wheel pulse (301) by a level that is higher than the second threshold value (IS2), and that detects an error when a third threshold value (IS3) that is higher than the second threshold value is exceeded.

15. A device according to Claim 14, **characterized in that** the determining device (202) is designed to determine the duration of the wheel pulse (301) by starting the time measurement when the second threshold value (IS2) is exceeded and terminating it when the current falls below the first threshold value (IS1) and to determine the duration of the auxiliary pulse (304) by starting the time measurement when the first threshold value (IS1) is exceeded and terminating the measurement when the current falls below the first threshold value (IS1).

16. A device according to Claim 15, **characterized in that** the determining device (202) exhibits a counter that is started when the first threshold value (IS1) is exceeded, reset and started again when the second threshold (IS2) is exceeded, and stopped when the current falls below the first threshold value (IS1).

17. A device according to one of the preceding claims, **characterized in that** the quantity of the data to be received is decided according to the wheel speed.

18. A device according to one of the Claims 14 to 17, **characterized in that** sampling of the data pulses (303) is initiated when a wheel pulse (301) or auxiliary pulse (304) falls below the first (IS1) and/or second (IS2) threshold value.

19. A device according to one of the Claims 10 to 18, **characterized in that** the received signal has different current levels and the threshold values (IS1,IS2,IS3) that may be provided are current threshold values.


**Revendications**

1. Procédé de traitement d'un signal transmettant des données codées, reçu d'un capteur actif (107) d'une roue de véhicule, comportant les étapes : déterminer à partir du signal reçu une constante de temps en fonction de laquelle les données ont été codées, et interpréter le signal reçu en fonction de la constante de temps déterminée.

**2.** Procédé selon la revendication 1, **caractérisé en ce que** les données ont été transmises codées par des impulsions (301, 303, 304) différenciables, et la constante de temps a été déterminée, par détermination de la durée d'une impulsion (301, 304), et/ou **en ce que** le signal reçu a été analysé en fonction de la constante de temps déterminée, et/ou **en ce que** la détermination de la constante de temps et l'interprétation, respectivement le traitement du signal reçu, s'effectuent en temps réel.

**3.** Procédé selon la revendication 1 ou 2, **caractérisé en ce que** le signal est une séquence d'impulsions dont la première impulsion est une impulsion de roue (301) qui est utilisée pour déterminer la vitesse de rotation de la roue, et dont les autres impulsions (303) sont des impulsions de données qui servent à la transmission codée d'autres données, l'impulsion de roue (301) étant remplacée à l'arrêt de la roue par une impulsion auxiliaire (304) par le capteur actif (107), côté émetteur.

**4.** Procédé selon la revendication 3, **caractérisé en ce que** l'impulsion auxiliaire (304) a une autre amplitude que l'impulsion de roue (301) et une durée sensiblement égale, et/ou **en ce que** l'impulsion auxiliaire (304) et l'impulsion de données (303) ont une amplitude sensiblement égale, et/ou **en ce qu'**une impulsion auxiliaire (304) a un niveau qui est supérieur à une première valeur seuil (IS1) et inférieur à une deuxième valeur seuil (IS2), et une impulsion de roue (301) a un niveau qui est supérieur à la deuxième valeur seuil (IS2), et un défaut étant reconnu lorsqu'une troisième valeur seuil (IS3), qui est supérieure à la deuxième valeur seuil (IS2), est dépassée.

**5.** Procédé selon la revendication 4, **caractérisé en ce que** pour déterminer la durée de l'impulsion de roue (301) la mesure du temps commence à l'instant où la deuxième valeur seuil (IS2) est dépassée, et se termine à l'instant où l'on passe au-dessous de la première valeur seuil (IS1), et pour déterminer la durée de l'impulsion auxiliaire (304), la mesure du temps commençant lorsque la première valeur seuil (IS1) est dépassée, et se terminant lorsque l'on passe au-dessous de la première valeur seuil (IS1).

**6.** Procédé selon la revendication 5, **caractérisé en ce que** la détermination de la durée s'effectue au moyen d'un compteur qui est initialisé lorsqu'est dépassée la première valeur seuil (IS1), est remis à zéro et réinitialisé lorsqu'est dépassée la deuxième valeur seuil (IS2) et est stoppé lorsque l'on passe au-dessous de la première valeur seuil (IS1).

**7.** Procédé selon l'une des revendications 1 à 6, **caractérisé en ce que** la quantité des données à recevoir est décidée en fonction de la vitesse de rotation de la roue.

**8.** Procédé selon l'une des revendications 4 à 7, **caractérisé en ce que** le balayage des impulsions de données (303) est déclenché lorsqu'une roue (301) ou une impulsion auxiliaire (304) passe au-dessous de la première valeur seuil (IS1) et/ou de la deuxième valeur seuil (IS2).

**9.** Procédé selon l'une des revendications 1 à 8, **caractérisé en ce que** le signal reçu possède différents niveaux de courant et les valeurs seuil (IS1, IS2, IS3) prévues sont des valeurs seuil de courant.

**10.** Dispositif (104) qui fait partie d'une régulation de véhicule (101), pour le traitement d'un signal transmettant des données codées, reçu d'un capteur de roue actif (107), comportant un dispositif de détermination (202) pour déterminer à partir du signal reçu une constante de temps en fonction de laquelle les données ont été codées, ainsi qu'un dispositif d'interprétation (201) pour interpréter et/ou traiter le signal reçu en fonction de la constante de temps déterminée.

**11.** Dispositif selon la revendication 10, **caractérisé en ce que** le signal reçu comporte des impulsions (301, 303. 304) différenciables et le dispositif de détermination (202) détermine la constante de temps par détermination de la durée d'une impulsion (301, 304) et/ou **en ce que** le dispositif d'interprétation (201) analyse le signal reçu en fonction de la constante de temps déterminée par le dispositif de détermination (202) et/ou **en ce que** le dispositif de détermination (202) et le dispositif d'interprétation (201) fonctionnent en temps réel.

**12.** Dispositif selon la revendication 10 ou 11, **caractérisé en ce qu'**il est conçu pour recevoir un signal qui est une séquence d'impulsions dont la première impulsion est une impulsion de roue (301) qui est utilisée pour déterminer la vitesse de rotation de la roue et dont les autres impulsions (303) sont des impulsions de données qui servent à la transmission codée d'autres données, l'impulsion de roue (301) étant remplacée à l'arrêt de la roue par une impulsion auxiliaire (304), par le capteur actif (107), côté émetteur.

**13.** Dispositif selon la revendication 12, **caractérisé en ce que** l'impulsion auxiliaire (304) a une autre amplitude que l'impulsion de roue (301) et une durée sensiblement égale et/ou **en ce que** l'impulsion auxiliaire (304) et l'impulsion de données (303) ont une amplitude sensiblement égale.

**14.** Dispositif selon la revendication 13, **caractérisé par** un dispositif de reconnaissance (203) qui reconnaît une impulsion auxiliaire (304) à un niveau qui est supérieur à une première valeur seuil (IS1) et inférieur à une deuxième valeur seuil (IS2) et qui reconnaît une impulsion de roue (301) à un niveau qui est supérieur à la deuxième valeur seuil (IS2), et qui reconnaît une défaut lorsqu'une troisième valeur seuil (IS3), qui est supérieure à la deuxième valeur seuil (IS2), est dépassée.

**15.** Dispositif selon la revendication 14, **caractérisé en ce que** le dispositif de détermination (202) est conçu pour déterminer la durée de l'impulsion de roue (301), pour commencer la mesure du temps lorsque la deuxième valeur seuil (IS2) est dépassée, et pour la terminer lorsque l'on passe au-dessous de la première valeur seuil (IS1), et pour la détermination de la durée de l'impulsion auxiliaire (304), pour commencer la mesure du temps lorsque la première valeur seuil (IS1) est dépassée et pour la terminer lorsque l'on passe au-dessous de la première valeur seuil (IS1).

**16.** Dispositif selon la revendication 15, **caractérisé en ce que** le dispositif de détermination (202) comporte un compteur qui est initialisé lorsqu'est dépassée la première valeur seuil (IS1), est remis à zéro et réinitialisé lorsqu'est dépassée la deuxième valeur seuil (IS2) et est stoppé lorsque l'on passe au-dessous de la première valeur seuil (IS1).

**17.** Dispositif selon l'une des revendications précédentes, **caractérisé en ce que** la quantité des données à recevoir est décidée en fonction de la vitesse de rotation de la roue.

**18.** Dispositif selon l'une des revendications 14 à 17, **caractérisé en ce que** le balayage des impulsions de données (303) est déclenché lorsqu'une roue (301) ou une impulsion auxiliaire (304) passe au-dessous de la première valeur seuil (IS1) et/ou de la deuxième valeur seuil (IS2).

**19.** Dispositif selon l'une des revendications 10 à 18, **caractérisé en ce que** le signal reçu possède différents niveaux de courant et les valeurs seuils (IS1, IS2, IS3) prévues sont des valeurs seuil de courant.

# Fig. 1

# Fig. 2

# Fig. 3

Fig. 4

EP 1 034 637 B1

# Fig. 5

State 0 — **500**

asl2='1' und asl3='0' und
Logik_out='1'

asl3='1'

**501**

State 1
Radpulsbreite ausmessen
Zähler 1 starten
Bei asl ='0' Zähler 2
starten

asl3='1'

State 2
Standby-Sychronisierpulse
ausmessen
Zähler 1 starten

**502**

asl2='0'

asl2='0'

einlesen der Daten beendet oder asl3='1'

State 3
Zähler 2 zählt immer bis
zahlzustand Zähler 1, dann
Datenbit lesen und Zähler 2
erneut starten

**503**

Fig. 6